# EUROPEAN PATENT SPECIFICATION

(11) **EP 2 695 742 B1**
(45) Date of publication and mention of the grant of the patent: **28.01.2015**
(21) Application number: 12179499.4
(22) Date of filing: 07.08.2012
(51) Int. Cl.: B42D 15/00

(54) **A method of manufacture of a security element for a data carrier and security element made thereby**
Verfahren zur Herstellung eines Sicherheitselementes für einen Datenträger und damit hergestelltes Sicherheitselement
Procédé de fabrication d'un élément de sécurité pour support de données et élément de sécurité ainsi obtenu

(43) Date of publication of application: 12.02.2014
(73) Proprietor: Oberthur Technologies, 92300 Levallois-Perret (FR)
(72) Inventor: Duval, Agnès, 92000 Nanterre (FR); Le Garrec, Loïc, 92000 Nanterre (FR)
(74) Representative: Lefevre-Groboillot, David André

(56) References cited:
- EP-A2- 1 842 689
- US-A- 3 874 963
- US-A- 5 252 167

## Description

### Field of the Invention

The present invention relates to a method of manufacture of a security element for a data carrier and to a security element made by said method. In particular but not exclusively the data carrier is a multi-layer card such as an ID or a smart card.

### Background of the Invention

It is known to have elements embedded in data carriers such as credit cards or ID cards or bank notes. In the case of bank notes, security threads or security strips are included in the security paper which is then printed with features that are both decorative and have security elements.

For data carriers such as credit cards or ID cards that have an electronic module, wires may be embedded in the body of the card for example in a plastic layer or in a composite plastic/paper layer when the material making up the card body is hot. The wire can be seen in the body of the card when it is held to the light or the wire may pass through the card and extend to a side edge of the card where it then is visible. Having the wire in the card gives a type of signature of the authenticity of manufacture. However where there is a separate chip for a card and a security element it is possible for one of both members to be removed from the card and placed in another card which allows data carriers to be cloned which of course can compromise security and the information contained on it.

It is possible to have a security element that covers a greater area of a data carrier, for example a foil with a hologram image may be hot stamped onto the surface of a data carrier. However, as the foil is not within the body of the card there is the risk that the foil may be damaged or it could be removed from the card surface. Moreover, if a foil is required to have a particular shape it is necessary to change the punch-die, each time a new shape is required.

As data carriers such as credit or ID cards carry a large amount of confidential data, it is essential that the data carrier includes security elements that are difficult to reproduce and which can be made at a very high quality so that should a criminal try and reproduce the data carrier then this is difficult to do without it being evident that the cloned data carrier is a fake. It is also desirable to have the security element covering as much of the data carrier as possible so that it becomes difficult to separate various parts of the data carrier from one another so that they can be put in cloned cards. Furthermore it is desirable to provide a particular security element that is attractive to the user as it is of high quality and which can be produced in a cost and time efficient way.

The present invention seeks to overcome the problems of the prior art by providing a method of making a security element that covers a significant part of the data carrier, which is accurately produced and which by providing a visible security measure with a clearly defined image makes data carriers more difficult to counterfeit.

Document US-A-5252167 discloses a method according to the preamble of claim 1 in which the image outlining member touches the visible layer thereby defining the outline of the image and material not required to form the image is removed, so providing the image on the substrate.

### Summary of the Invention

According to a first aspect of the invention there is provided a method of making a security element for a data carrier wherein a substrate is provided and a visible layer is over-laid on said substrate, whereby an image outlining member is positioned on said visible layer to define an outline of an image to be formed on the substrate and the image outlining member is caused to melt said visible layer where said image outlining element touches the visible layer thereby defining the outline of the image and material not required to form the image is removed, so providing the image on the substrate. The image may be a positive image where material outside the outline is removed or a negative image where material within the outline is removed.

Preferably the substrate is a plastic material.

In particular the plastic material selected from one or more of a polycarbonate, Polyvinyl chloride (PVC), polyethylene terephthalate (PET), polyethylene terephthalate glycol (PETg) or polyethylene terephthalate Film (PETf).

It is preferred that the visible layer is formed from polyethylene terephthalate. In particular the visible layer is provided as a metallized plastic foil.

It is envisaged that the image outlining member is a wire that has been embedded in the visible layer.

In an alternative arrangement the image outlining member is a head on a tool that is positioned on the visible layer.

It is envisaged that the outlining tool is moveable and can trace the outline of the image to be formed, or it could be that the tool is static with the substrate being moveable so an outline is formed.

It is preferred that high frequency energy is passed through said wire or head on the tool to cause embedding of the wire in the visible layer and into the substrate. The high frequency energy generates heat that causes the plastic material of the visible layer of the data carrier to melt so the wire can be embedded in the substrate underneath it.

Preferably the high frequency energy is ultrasonic energy.

It is envisaged that once the visible element has been outlined and the material beyond the image removed, that the wire is also removed.

In an alternative arrangement the wire is left in situ. If the wire is left in situ, it may also act as an antenna for the data carrier.

The wire is embedded in the plastic substrate as a result of melting the plastic of the visible layer and the substrate. If there are several layers into which the wire is embedded there will be local melting of the plastic layers to weld the layers together. The local welding makes it possible to detach the unused part of the visible layer as the melting forms local areas of weakness in the layers of the data carrier. The visible layer is melted and because the wire diameter is larger than the thickness of the visible layer it is in effect cut and so material that is not required can be removed easily.

As an alternative it is envisaged that the wire includes a heat activtatable material at points on the wire such that as the wire is heated the heat activatable material forms seals between the substrate and the visible layer. It is envisaged that the heat activatable material is a solder or thermoplastic material of a lower heat resistance than the material forming the substrate and visible layer.

It is preferred that where the cutting of the visible element is by using a tool transmitting ultrasonic energy that there is also a cutting blade such that when material beyond the outline of the image is removed, then the blade cuts away any burs formed during the cutting process.

In a preferred arrangement the security element is attached to further layers to form a data carrier.

Preferably the data carrier is a contactless card with the wire forming the image defining member also providing the antenna for the data carrier.

According to a second aspect of the invention there is provided a data carrier having a security element formed according to a first aspect of the invention.

Preferably the data carrier is formed of layers bonded together with the security element forming one of said layers. The bonding may be via an adhesive between the layers of the layers are hot melted together.

The security element is preferably made of a plastic laminate.

It is envisaged that the data carrier is a credit card, a SIM card, an identity card or a passport. These are examples of the types of data carries that can be used, and is not to be viewed as limiting.

According to a third aspect of the invention there is provided a tool for forming a security element wherein the tool has a head for emitting ultrasonic energy, said tool having adjacent the head, a cutting edge such that once a visible layer has been melted by ultrasonic energy and the material not required to form the image is removed, the cutting edge cuts burs that have formed during the ultrasonic cutting away, leaving a clean edge for the material forming the image on the substrate.

It is to be understood that data carrier may be made from natural or synthetic fibres or mixtures thereof. Furthermore, the plastic used may be a single plastic material, layers of the same or different plastic materials or there may be a combination of plastic and paper fibers.

### Brief Description of the Figures

An embodiment of the invention will be described with reference to and as illustrated in the accompanying figures by way of example only, in which:
Figure 1 shows: the stages in the formation of a security element according to a first aspect of the invention;
Figure 2 shows: a side view of tools used for the method as outlined in Figure 1;
Figure 3 shows: a security element where a wire remains embedded and the visible layer is cut around the wire; and
Figure 4 shows: an alternative arrangement where a wire is removed from the security element.

### Detailed Description of Embodiments of the Invention

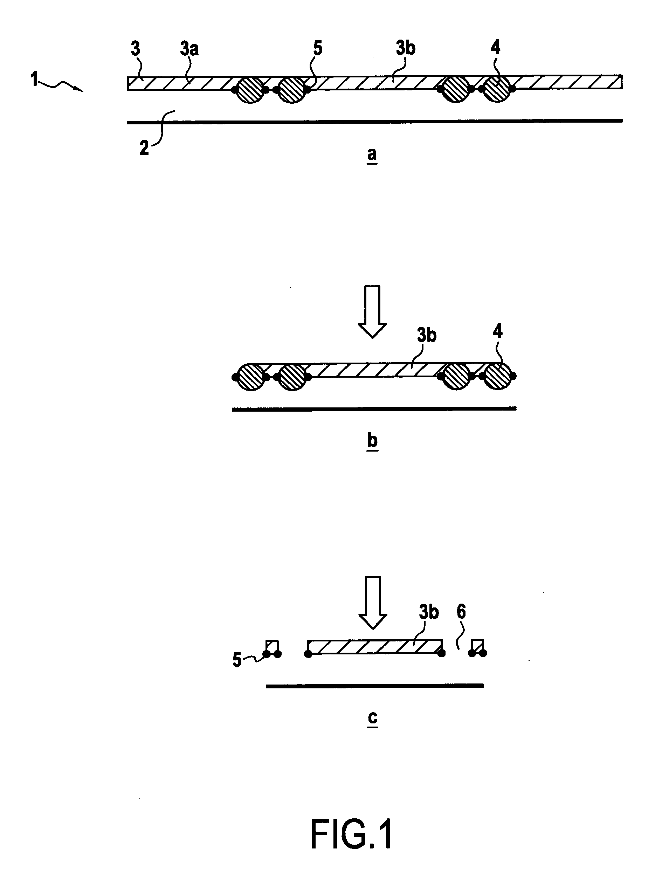

As shown in **Figure 1** the data carrier, which is generally shown as 1 comprises a substrate 2, that forms the body of the security element that can be incorporated in a data carrier. The substrate is usually a plastic material, or it may be a paper based material for biodegradable data carriers. Typically the substrate is PVC that is 200 microns in thickness.

On the substrate there is an element 3 that provides a visual layer. The visual layer may be a metalized foil or plastic or a plastic material that has holographic properties. Typically the visible layer is a polycarbonate, for example white polycarbonate which is 70 microns in thickness. This may have a clear PVC overlay of 40 microns in thickness and over this there is a PET foil of 17 microns in thickness. PET is used as an example and other plastic based foils could be used. Typically the foil has a maximum thickness of 100 microns as the wire diameter is greater than the thickness of the visible layer.

Sitting within the layer 3 are wires 4 that extend into the layer 2. As shown there are two wires that are side by side but the number of turn of the wire can vary. The wires can be positioned on the foil in an arrangement that provides an outline, for example for a data carrier that is to be used in a particular country, the outline of that country may be the shape of the country on a map. Outside of the boundary of the outline is an area of foil 3a and within the boundary is an area of foil 3b. The foil 3b will form the image on the substrate while the foil 3a is surplus to requirements and is optionally removed. It is possible to have a positive image where the material bounded by the image outlining member remains or a negative image may be formed where the material outside of the image outlining member remains.

The Figure shows the three stages in the production of an image on a card. Stage a) involves the location of a wire in a card, stage b) relates to the removal of extraneous material from the visual element and stage c) illustrates the removal of wire to leave a visual element that is in a desired shape on the substrate.

At stage b) the material 3a that is outside the boundary formed by the wires 4 is removed leaving the material 3b that is within the boundary and the wires embedded in the layer 2. The wires may remain in situ if the card is of the type that has antennae, for example a contactless card. Alternatively the wire may be removed as shown in Stage c). If the wire is removed then there is sealing or what we also refer to as soldering of the edges soldering (there is also soldering if the wire is still here) at points 5 between the substrate 2 and the visual layer 3 so that there is a good bond between the two at the points where the foil has removed. The good bond means that the risk of the layers delaminating is minimized and also the edge of the material that is left is neater as it is provided as a clean cut.

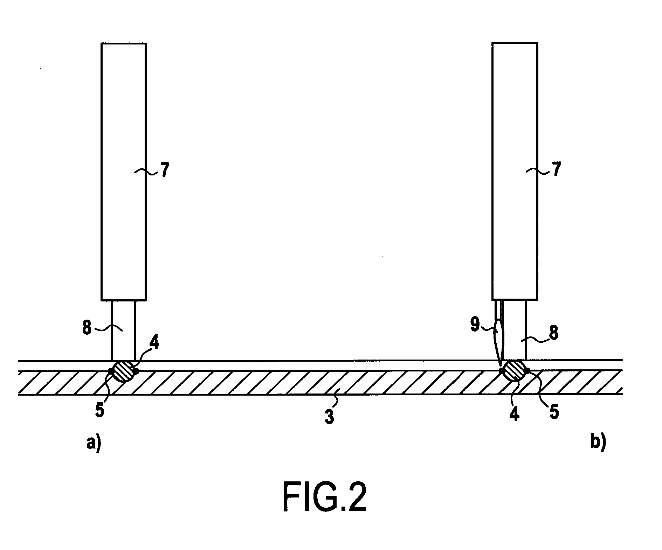

**Figure 2** shows two tools that can be used to form an image on a card. As shown in Figure 2a the tool that is used to embed wire in the visible layer 3 and ultimately in the plastic material is an ultrasonic generator 7 connected to a head 8. The head contacts a wire 4 in situ in a visible layer 3 and ultrasonic waves are generated with are transmitted to the wire as a result of the head 8 contacting the wire. The wire gets hot and melts the visible layer 3 at the points where the wire is present. The wire may also have solder points 5 such that when the wire gets hot there is localized melting of plastic in the visible layer 3 and the substrate 2 so that a bond is formed between the substrate and the visible element and any spaces between the two are sealed.

Figure 2b shows a similar device to that shown in Figure 2a except that in addition to the head 8, there is also a blade 9 that is in proximity to the point where the head 8 abuts against the visible layer. As the head generates heat, for example by ultrasonics, the wire itself gets hot and begins to melt the visible layer. The melting process forms a cut in the visible layer. There may be points of heat activatable material 5 on the wire, for example a solder or low heat resistance plastic or glue that when heated melts and form a seal between the substrate and the visible layer. The melting process can leave an uneven surface and if a clean image is required uneven edges such as burs of plastic or solder need to be removed. As the material 3 that is not required is removed it can be moved past the blade 9 by lifting the visible layer away from the substrate and as the material passes the blade it is cut cleanly by the blade so leaving a sharp outline for the image on the substrate. Wire that is embedded may be fed onto the visible layer through the head of the tool to provide the embedded wire 4.

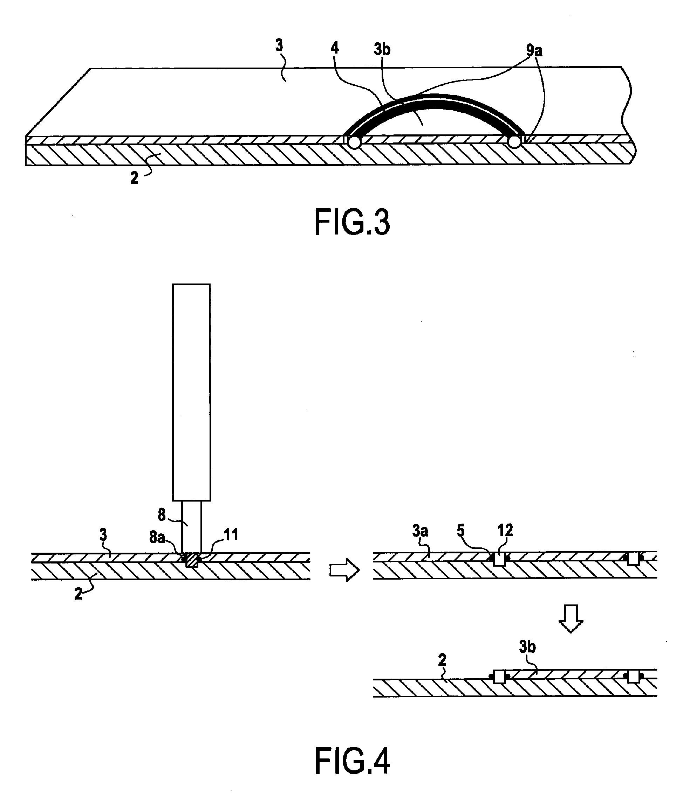

The wire may remain in situ in the visible layer as shown in **Figure 3****.** As shown, the visible layer 3 is placed on the substrate 2. A wire 4 is embedded in the visible layer and in the substrate and divides the visible layer into two parts, the material that is to form an image 3b and the material that is to be removed 3a. If a tool as shown in Figure 2 is used, then an outline can be traced by moving the tool in a direction that follows the wire 4 but which passes on the side of the wire where material 3a is positioned. This allows for an image to be traced while the wire 4 remains in situ. It is envisaged that as an alternative, the material 3a could remain in placed with the image being traced on the inside of the wire in the locality of material 3b so a negative image is produced. As shown there is a cut 9a formed by blade 9 that outlines the wire.

**Figure 4** shows an alternative arrangement where the wire has been removed. Rather than using a wire a contact point 8a on the head of the tool is used to melt the visible layer.

The ultrasonic device 7 has a head 8 which generates energy that is used to melt the visible layer where the head or more particularly touches the visible layer. The heat may either transmit heat to a wire embedded in the visible layer or it may melt the visible layer by direct contact with the head. The head has welding points 11, which are positioned on either side of the contact point 8a of the head 8 so that at it cuts through the visible layer the sides of the cut are welded so forming a neat edge to the cut and also forming a join between the visible layer and the substrate. The edges form a boundary for an aperture 12 that can be used as a tear line to remove material from the visible layer that is not needed on the substrate 2. The visible layer bounder by two apertures forms the outlined visible layer that is of a required shape to provide a security feature and also an aesthetic element.

Once the visible layer has been cut and the extraneous material has been removed the finished security element is then laminated with other layers to form a data carrier. Because the wire and cutting can be carried out in several locations on a substrate it is possible to make multiple images at the same time. This allows for the production of several cards in one sheet (a standard process for card production) that are then cut with a punch die machine to form the final outline of the data carrier. The fact that several cards can be produced simultaneously reduces the risk of inconsistencies in production because a multi-headed embedding toll can be used to place the image outlining members in position. A further advantage is that being able to cut many cards at the same time saves on production time and costs.

Typically the data carrier is a planar element having a thickness of around 0.76mm plus or minus 10%. The data carrier may be a microcircuit card and is preferably a smart card complaint with ISO 7816. As an alternative the data carrier may be a memory card which is complaint with security standards e.g. SD standard.

After forming a visual security element in the data carrier, there may be further processing, which may include the provision of printing, further lamination and the affixing of photographs, the laminated card may be incorporated in a number of security documents, such as bank cards, driving licenses, passports or identity badges. In particular in the case of passports, the passport is a multipage document with at least one page being multilayer and having plastic layers (typically polycarbonate) in which an antenna is incorporated. The use of for example polycarbonate increases the security and durability of the security page in the passport.

It is to be understood that the above embodiments have been provided only by way of exemplification of this invention, such as those detailed below, and that further modifications and improvements thereto, as would be apparent to persons skilled in the relevant art, are deemed to fall within the scope of the present invention as long as they fall within the scope of the claims.

## Claims

1. A method of making a security element for a data carrier (1) wherein a substrate (2) is provided an and a visible layer (3) is over-laid on said substrate, wherein an image outlining member (4) is positioned on said visible layer (3) to define an outline of an image to be formed on the substrate, **characterized in that** the image outlining member (4) is caused to melt said visible layer where said image outlining member touches the visible layer (3) thereby defining the outline of the image and material not required to form the image is removed, so providing the image on the substrate (2).

2. A method according to claim 1 wherein the substrate (2) is a plastic material selected from one or more of a polycarbonate, polyethylene terephthalate (PET), polyethylene terephthalate glycol (PETg) or polyethylene terephthalate Film (PETf) or polyvinylchloride ( PVC).

3. A method according to claim 1 or claim 2, wherein the visible layer (3) is formed from polyethylene terephthalate or a metallized foil.

4. A method according to any preceding claim wherein the image outlining member (4) is a wire that has been embedded in the visible layer (3).

5. A method according to any of claims 1 to 3 wherein the image outlining member (3) is a head (8) on a tool (7) that is positioned on the visible layer (3).

6. A method according to claim 5, wherein the tool (7) is either static with the head (8) of the tool providing the complete outline of the image or the tool (7) is moveable and can trace the outline of the image to be formed.

7. A method according to any preceding claim wherein high frequency energy is passed through said image outlining element (4) or head (8) on the tool to cause melting and welding locally of said visible layer (3).

8. A method according to claim 7, wherein high frequency energy is ultrasonic energy.

9. A method according to any preceding claim wherein once the visible layer (3) has melted then material not required to form the image is removed and where an image outlining element is embedded in the visible layer, the image outlining element is also removed.

10. A method according to any of claims 1 to 8 wherein once the visible layer (3) has melted then material not required to form the image is removed and but the image outlining element (4) is left in the visible layer (3).

11. A method according to any preceding claim wherein the image outlining element (4) or the head (8) of the tool is associated with a heat activtatable material (5) that forms a bond between the substrate (2) and the visible layer (3).

12. A method according to any preceding claim wherein after the visible layer (3) is melted using head (8) then unwanted material is removed and as doing so, it passes blade (9) associated with the head (8) thereby removing any burs from an edge of the visible layer (3) that has been cut by melting.

13. A method according to any preceding claim wherein the security element (1) is attached to further layers to form a data carrier.

14. A data carrier formed by a method according to any of claims 1 to 13, and in particular, a data carrier in the form of a credit card, a SIM card, an identity card or a passport.

15. A tool for forming a security element according to a method of any of claim 1 to 13, wherein the tool (7) has a head (8) for emitting ultrasonic energy, said tool having adjacent the head, a cutting edge (9) such that once a visible layer (3) has been melted by ultrasonic energy and the material not required to form the image is removed, the cutting edge (9) cuts burs that have formed during the ultrasonic cutting away, leaving a clean edge for the material forming the image on the substrate (2).

## Patentansprüche

1. Verfahren zum Herstellen eines Sicherheitselementes für einen Datenträger (1), wobei ein Substrat (2) bereitgestellt wird und eine sichtbare Schicht (3) dem Substrat überlagert wird, wobei ein bildumreißendes Element (4) auf der sichtbaren Schicht (3) angeordnet wird, um eine Kontur eines auf dem Substrat auszubildenden Bildes zu definieren, **dadurch gekennzeichnet, dass** das bildumreißende Element (4) dazu gebracht wird, die sichtbare Schicht zu schmelzen, wo das b0ildumreißende Element die sichtbare Schicht (3) berührt, wodurch die Kontur des Bildes definiert wird und Material, das nicht zum Ausbilden des Bildes benötigt wird, entfernt wird, um das Bild auf dem Substrat (2) bereitzustellen.

2. Verfahren nach Anspruch 1, wobei das Substrat (2) ein Kunststoffmaterial ist, das aus einem oder mehreren von einem Polycarbonat, Polyethylenterephthalat (PET), Polyethylenterephthalatglykol (PETg) oder Polyethylenterephttalatfilm (PETf) oder Polyvinylchlorid (PVC) ausgewählt ist.

3. Verfahren nach Anspruch 1 oder 2, wobei die sichtbare Schicht (3) aus Polyethylenterephthalat oder einer metallisierten Folie gebildet ist.

4. Verfahren nach einem der vorhergehenden Ansprüche, wobei das bildumreißende Element (4) ein Draht ist, der in die sichtbare Schicht (3) eingebettet worden ist.

5. Verfahren nach einem der Ansprüche 1 bis 3, wobei das bildumreißende Element (4) ein Kopf (8) auf einem Werkzeug (7) ist, das auf der sichtbaren Schicht (3) angeordnet wird.

6. Verfahren nach Anspruch 5, wobei das Werkzeug (7) entweder mit dem Kopf (8) des Werkzeuges feststehend ist und das die vollständige Kontur des Bildes bereitstellt, oder wobei das Werkzeug (7) bewegbar ist und die Kontur des auszubildenden Bildes nachverfolgen kann.

7. Verfahren nach einem der vorhergehenden Ansprüche, wobei Hochfrequenzenergie durch das bildumreißende Element (4) oder den Kopf (8) des Werkzeuges geleitet wird, um ein örtliches Schmelzen und Schweißen der sichtbaren Schicht (3) zu bewirken.

8. Verfahren nach Anspruch 7, wobei die Hochfrequenzenergie Ultraschallenergie ist.

9. Verfahren nach einem der vorhergehenden Ansprüche, wobei, sobald die sichtbare Schicht (3) geschmolzen ist, das Material, das nicht zum Ausbilden des Bildes benötigt wird, entfernt wird und, wenn ein bildumreißendes Element in der sichtbaren Schicht eingebettet ist, das bildumreißende Element ebenfalls entfernt wird.

10. Verfahren nach einem der Ansprüche 1 bis 8, wobei, sobald die sichtbare Schicht (3) geschmolzen ist, das Material, das nicht zum Ausbilden des Bildes benötigt wird, entfernt wird, aber das bildumreißende Element (4) in der sichtbaren Schicht (3) belassen wird.

11. Verfahren nach einem der vorhergehenden Ansprüche, wobei das bildumreißende Element (4) oder der Kopf (8) des Werkzeuges mit einem wärmeaktivierbaren Material (5) assoziiert ist, das eine Bindung zwischen dem Substrat (2) und der sichtbaren Schicht (3) ausbildet.

12. Verfahren nach einem der vorhergehenden Ansprüche, wobei, nachdem die sichtbare Schicht (3) unter Verwendung des Kopfes (8) geschmolzen ist, das unerwünschte Material entfernt wird, und während das geschieht, sie an einer Klinge (9) vorbeigeführt wird, die mit dem Kopf (8) assoziiert ist, wodurch jegliche Grate an einer Kante der sichtbaren Schicht (3) entfernt werden, die durch Schmelzen geschnitten worden ist.

13. Verfahren nach einem der vorhergehenden Ansprüche, wobei das Sicherheitselement (1) an weiteren Schichten befestigt ist, um einen Datenträger auszubilden.

14. Datenträger, der durch ein Verfahren nach einem der Ansprüche 1 bis 13 ausgebildet ist, und insbesondere ein Datenträger in der Form einer Kreditkarte, einer SIM-Karte, einer Identitätskarte oder eines Ausweises.

15. Werkzeug zum Ausbilden eines Sicherheitselementes gemäß einem Verfahren nach einem der Ansprüche 1 bis 13, wobei das Werkzeug (7) einen Kopf (8) zum Emittieren von Ultraschallenergie aufweist, wobei das Werkzeug benachbart zum Kopf eine Schnittkante (9) aufweist, so dass sobald eine sichtbare Schicht (3) durch Ultraschallenergie geschmolzen worden ist und das Material, das nicht zum Ausbilden des Bildes benötigt wird, entfernt ist, die Schnittkante (9) Grate wegschneidet, die während des Ultraschallschneidens ausgebildet worden sind, so dass eine saubere Kante für das Material, welches das Bild auf dem Substrat (2) ausbildet, übrig bleibt.

## Revendications

1. Procédé de fabrication d'un élément de sécurité pour un support de données (1) dans lequel un substrat (2) est fourni et une couche visible (3) est superposée sur ledit substrat, dans lequel un élément de contour d'image (4) est positionné sur ladite couche visible (3) pour définir un contour d'une image à former sur le substrat, **caractérisé en ce que** l'élément de contour d'image (4) fait fondre ladite couche visible où ledit élément de contour d'image touche la couche visible (3), définissant par-là le contour de l'image et un matériau non nécessaire pour former l'image est éliminé, fournissant ainsi l'image sur le substrat (2).

2. Procédé selon la revendication 1, dans lequel le substrat (2) est un matériau plastique choisi parmi un ou plusieurs d'un polycarbonate, polyéthylène téréphtalate (PET), polyéthylène téréphtalate glycol (PETg) ou film de polyéthylène téréphtalate (PETf) ou poly(chlorure de vinyle) (PVC).

3. Procédé selon la revendication 1 ou la revendication 2, dans lequel la couche visible (3) est formée de polyéthylène téréphtalate ou d'une feuille métallisée.

4. Procédé selon l'une quelconque des revendications précédentes, dans lequel l'élément de contour d'image (4) est un câble qui a été encastré dans la couche visible (3).

5. Procédé selon l'une quelconque des revendications 1 à 3, dans lequel l'élément de contour d'image (4) est une tête (8) sur un outil (7) qui est positionné sur la couche visible (3).

6. Procédé selon la revendication 5, dans lequel l'outil (7) est soit statique avec la tête (8) de l'outil fournissant le contour complet de l'image soit l'outil (7) est mobile et peut tracer le contour de l'image à former.

7. Procédé selon l'une quelconque des revendications précédentes, dans lequel une énergie de fréquence élevée passe à travers lesdits élément de contour d'image (4) ou tête (8) sur l'outil pour occasionner une fusion et un soudage localement de ladite couche visible (3).

8. Procédé selon la revendication 7, dans lequel l'énergie de fréquence élevée est l'énergie ultrasonique.

9. Procédé selon l'une quelconque des revendications précédentes, dans lequel une fois que la couche visible (3) a fondu, du matériau non nécessaire pour former l'image est ensuite éliminé, et dans lequel un élément de contour d'image est encastré dans la couche visible, l'élément de contour d'image est également éliminé.

10. Procédé selon l'une quelconque des revendications 1 à 8, dans lequel une fois que la couche visible (3) a fondu, du matériau non nécessaire pour former l'image est ensuite éliminé et l'élément de contour d'image (4) est cependant laissé dans la couche visible (3).

11. Procédé selon l'une quelconque des revendications précédentes, dans lequel l'élément de contour d'image (4) ou la tête (8) de l'outil est associé à un matériau thermiquement activable (5) qui forme une liaison entre le substrat (2) et la couche visible (3).

12. Procédé selon l'une quelconque des revendications précédentes, dans lequel après que la couche visible (3) est fondue en utilisant une tête (8), du matériau non souhaité est ensuite éliminé et en procédant ainsi, il passe une lame (9) associée à la tête (8), éliminant par-là toute bavure d'un bord de la couche visible (3) qui a été coupée par fusion.

13. Procédé selon l'une quelconque des revendications précédentes, dans lequel l'élément de sécurité (1) est fixé à d'autres couches pour former un support de données.

14. Support de données formé par un procédé selon l'une quelconque des revendications 1 à 13, et en particulier, support de données dans la forme d'une carte de crédit, d'une carte SIM, d'une carte d'identité ou d'un passeport.

15. Outil pour la formation d'un élément de sécurité selon un procédé selon l'une quelconque des revendications 1 à 13, dans lequel l'outil (7) présente une tête (8) pour émettre une énergie ultrasonique, ledit outil présentant à côté de la tête, un bord de coupe (9) tel qu'une fois qu'une couche visible (3) a fondu par l'énergie ultrasonique et que le matériau non nécessaire pour former l'image est éliminé, le bord de coupe (9) coupe des bavures qui ont été formées pendant la coupe ultrasonique, laissant un bord propre pour le matériau formant l'image sur le substrat (2).
